# FASCICULE DE BREVET EUROPEEN

(11) **EP 4 015 299 B1**
(45) Date de publication et mention de la délivrance du brevet: **18.10.2023**
(21) Numéro de dépôt: 21213505.7
(22) Date de dépôt: 09.12.2021
(51) Int. Cl.: B60N 2/04

(54) **VÉHICULE COMPRENANT UNE BANQUETTE À DEUX POSITIONS**
FAHRZEUG, DAS EINE BANK MIT ZWEI SITZPLÄTZEN UMFASST
VEHICLE COMPRISING A BENCH SEAT WITH TWO POSITIONS

(30) Priorité: 16.12.2020 FR 2013332
(43) Date de publication de la demande: 22.06.2022
(73) Titulaire: Renault s.a.s, 92100 Boulogne Billancourt (FR)
(72) Inventeur: BEZEAULT, LOIC, 78150 LE CHESNAY (FR)
(74) Mandataire: Renault Group

(56) Documents cités:
- FR-A1- 2 898 554
- FR-A1- 3 004 391

## Description

La présente invention concerne un véhicule comprenant une banquette à deux positions. FR 3 004 391 A1 divulgue un exemple de banquette à deux positions de l'art antérieur.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

Cette banquette, qui peut par exemple comprendre deux ou trois places, est placée derrière une rangée avant composée généralement d'un siège conducteur et d'un siège passager. Actuellement, la position de cette banquette est variable le long d'un axe longitudinal X du véhicule par le biais d'un coulissement le long dudit axe. Ce coulissement est réalisé au moyen de rails et/ou glissières placés à deux zones d'extrémité de ladite banquette, considérées le long d'un axe transversal Y dudit véhicule, et d'un élément de déverrouillage. Cette banquette, qui est initialement verrouillée dans une position donnée le long d'un axe longitudinal X du véhicule, est libérée en translation par l'intermédiaire de l'actionnement de cet élément de déverrouillage, qui peut par exemple être un levier. Une fois que la banquette n'est plus retenue dans sa position, un occupant se saisit alors de celle-ci puis produit un certain effort afin de la déplacer le long desdits rails et/ou glissières pour la placer dans une autre position à sa convenance. Or, une telle solution présente plusieurs inconvénients :
- les rails et/ou les glissières sont des objets encombrants empiétant largement sur l'espace de l'habitacle réservé aux occupants du véhicule,
- ce sont également des objets ayant un certain poids et ayant donc tendance à alourdir significativement le véhicule,
- le coulissement de la banquette doit être réalisé avec un certain effort et au prix d'une manipulation contraignante,
- dans le cas où un coffre serait placé juste derrière la banquette, il faut impérativement choisir entre une première configuration pour laquelle on privilégie le confort des occupants qui seraient assis sur ladite banquette en reculant la banquette et donc en réduisant le volume du coffre, et une deuxième configuration pour laquelle on réduit ledit confort en avançant la banquette et donc en agrandissant le volume dudit coffre.

Un véhicule selon l'invention comprend une banquette déplaçable le long d'un axe longitudinal X du véhicule et qui s'affranchit de tous les inconvénients rencontrés dans l'état de la technique.

L'invention a pour objet un véhicule comprenant une banquette permettant à au moins deux personnes de s'asseoir, ladite banquette comprenant une assise et un dossier, l'assise étant reliée à un plancher du véhicule par l'intermédiaire de deux biellettes avant montées en rotation dans deux zones d'extrémité avant de l'assise et dans deux pièces support du plancher placées au droit desdites zones d'extrémité, les deux biellettes avant étant agencées de telle sorte qu'elles puissent pivoter chacune dans un plan vertical et longitudinal XZ du véhicule, entre une première position pour laquelle elles placent la banquette dans une position avancée et une deuxième position pour laquelle elles placent ladite banquette dans une position reculée.

Selon l'invention, chaque biellette est montée en rotation dans la pièce support au moyen d'au moins un ressort précontraint ayant tendance par défaut à maintenir la biellette dans une position verticale correspondant à une position d'équilibre pour la banquette, ledit au moins un ressort étant configuré pour favoriser un déplacement vers l'avant ou vers l'arrière de la banquette en fonction de la direction de l'effort appliqué à ladite banquette, depuis sa position d'équilibre.

Autrement dit, les biellettes avant remplacent avantageusement les rails et/ou glissières des véhicules existants pour placer la banquette dans une position, soit avancée, soit reculée. Ces biellettes sont peu encombrantes et légères, et ne nécessitent pas un espace de dégagement important devant ou derrière la banquette pour permettre à celle-ci de se déplacer pour atteindre une position reculée ou avancée. Avec ce système de biellettes avant, la banquette d'un véhicule selon l'invention ne peut adopter que deux positions : soit reculée, soit avancée. De façon préférentielle, la banquette comprend au moins un organe de verrouillage permettant à ladite banquette d'être maintenue, soit dans la position reculée, soit dans la position avancée. Une personne désireuse de monter dans le véhicule pour s'asseoir sur la banquette va déplacer dans le sens voulu, soit vers l'avant soit vers l'arrière, ladite banquette pour se retrouver elle-même dans une position avancée ou dans une position reculée au sein dudit véhicule. Il est supposé que la banquette atteint son point le plus haut lorsque les biellettes s'étendent verticalement. Il est également sous-entendu que les biellettes pivotent simultanément et avec la même amplitude lorsque la banquette passe de la première position à la deuxième position, et vice et versa. La présence de ce dit au moins un ressort permet de faciliter le déplacement de la banquette dans le sens voulu depuis sa position d'équilibre correspondant à une position verticale des biellettes avant. Autrement dit, un individu désireux de faire pivoter la banquette vers l'avant depuis cette position d'équilibre pour lui faire atteindre la position avancée, va d'abord produire un effort initial sur la banquette pour provoquer ce pivotement vers l'avant, puis le ressort va prendre le relais pour favoriser naturellement ce pivotement vers l'avant en se relaxant. Ce phénomène se produit également lorsque la butée est déplacée vers l'arrière pour placer la banquette dans la position reculée. La banquette ayant une certaine inertie, le ressort facilite le déplacement vers l'avant ou vers l'arrière de la banquette.

Selon une caractéristique possible de l'invention, le véhicule comprend des moyens de verrouillage de la banquette dans la position avancée et dans la position reculée, ledit au moins un ressort favorisant un mouvement de la banquette vers sa position d'équilibre depuis la position reculée ou la position avancée, lorsque le moyen de verrouillage correspondant a été désactivé. Si la banquette est verrouillée dans la position avancée ou dans la position reculée, un utilisateur désireux de changer la banquette de position, va d'abord désactiver le moyen de verrouillage correspond puis va amorcer un déplacement de ladite banquette vers la position d'équilibre, ledit déplacement étant facilité par le ressort précontraint.

Selon une caractéristique possible de l'invention, les deux zones d'extrémité de l'assise sont alignées suivant un axe transversal Y du véhicule. Une telle configuration entraine que les biellettes sont alignées suivant un axe transversal Y du véhicule, pour permettre à ladite banquette de pivoter autour d'un axe transversal Y et horizontal du véhicule.

Selon une caractéristique possible de l'invention, chaque biellette est une pièce plane et de faible épaisseur, présentant deux surfaces parallèles, chacune desdites biellettes s'inscrivant dans un plan vertical et longitudinal XZ du véhicule. De cette manière, les biellettes sont dimensionnées au plus juste pour remplir leur fonction vis-à-vis de la banquette. Avantageusement, l'épaisseur des biellettes est inférieure à 1cm.

Selon une caractéristique possible de l'invention, chaque biellette est montée en rotation autour d'un axe de l'assise et autour un axe d'une pièce support, lesdits deux axes étant parallèles et s'étendant suivant un axe horizontal et transversal Y du véhicule, lesdits deux axes passant par les deux surfaces parallèles de chaque biellette en étant perpendiculaires auxdites surfaces.

Selon une caractéristique possible de l'invention, chaque pièce support présente une butée avant et une butée arrière, alignées suivant un axe longitudinal X du véhicule, lesdites butées délimitant l'amplitude angulaire de rotation de chaque biellette pour passer de la première position à la deuxième position et vice versa. Au sein du véhicule, il est important de pouvoir bien maitriser l'amplitude de déplacement de la banquette entre la position avancée et la position reculée. L'amplitude de rotation des biellettes et donc de la banquette pour passer de la position avancée à la position reculée et vice et versa, est fixée par le positionnement des butées sur chaque pièce support. Lorsque les biellettes arrivent en appui contre les butées avant, la banquette occupe alors la position avancée et lorsque les biellettes arrivent en appui contre les butées arrière, la banquette occupe alors la position reculée. Les butées peuvent revêtir toute forme, dès lors qu'elles sont en capacité de stopper la course de la biellette et donc de la banquette.

Selon une caractéristique possible de l'invention, chaque pièce support est matérialisée par une paroi comprenant deux tronçons plans convergents définissant un cône et un tronçon de liaison reliant lesdits deux tronçons convergents, chaque biellette étant placée dans l'espace délimité par lesdits trois tronçons, l'un des deux tronçons convergents matérialisant la butée avant et l'autre tronçon convergent matérialisant la butée arrière. La biellette pivote ainsi entre les deux tronçons convergents, pour passer d'une première position pour laquelle elle s'étend parallèlement à l'un desdits tronçons convergents en étant à son contact, à une deuxième position pour laquelle elle s'étend parallèlement à l'autre tronçon convergent en étant à son contact.

Selon une caractéristique possible de l'invention, chaque biellette est montée en rotation dans la pièce support au moyen d'au moins un ressort précontraint ayant tendance par défaut à maintenir la biellette dans une position verticale, ledit au moins un ressort étant configuré pour favoriser un déplacement vers l'avant ou vers l'arrière de la banquette en fonction de la direction de l'effort appliqué à ladite banquette.

Selon une caractéristique possible de l'invention, chaque biellette est montée en rotation dans une pièce support au moyen d'un seul ressort précontraint ayant tendance par défaut à maintenir la biellette dans une position verticale, ledit ressort étant configuré pour favoriser un déplacement vers l'avant ou vers l'arrière de la banquette en fonction de la direction de l'effort appliqué à ladite banquette. Avantageusement, le ressort unique possède deux composantes placées de chaque côté de la biellette, l'une ayant tendance à faire pivoter la biellette dans un sens et l'autre ayant tendance à faire pivoter ladite biellette dans l'autre sens.

Selon une caractéristique possible de l'invention, chaque biellette est montée en rotation dans une pièce support au moyen de deux ressorts précontraints dans des sens opposés et ayant tendance par défaut à maintenir la biellette dans une position verticale, l'un desdits ressorts étant configuré pour favoriser un déplacement vers l'avant de la banquette et l'autre ressort étant configuré pour favoriser un déplacement vers l'arrière de ladite banquette.

Selon une caractéristique possible de l'invention, l'assise est reliée à un plancher du véhicule par l'intermédiaire de deux biellettes arrière montées en rotation dans deux zones d'extrémité arrière de l'assise et dans un plancher arrière, les deux biellettes arrière étant agencées de telle sorte qu'elles puissent pivoter chacune dans un plan vertical et longitudinal XZ pour accompagner le pivotement des biellettes avant et guider le déplacement de la banquette. De cette manière, les deux biellettes arrière accompagnent le mouvement des biellettes avant pour rendre le déplacement de la banquette plus simple et plus propre, car aucune partie de l'assise de la banquette ne se déplacera en étant directement au contact du plancher arrière.

Un véhicule selon l'invention présente plusieurs avantages :
- il permet de s'affranchir de la présence de rails et/ou de glissières qui sont des objets encombrants empiétant largement sur l'espace de l'habitacle réservé aux occupants du véhicule, et qui sont également des objets lourds susceptibles d'alourdir significativement le véhicule,
- le déplacement de la banquette vers l'avant ou vers l'arrière s'effectue sans effort et sans avoir à effectuer de manipulations contraignantes,
- dans le cas où un coffre serait placé juste derrière la banquette, le déplacement de ladite banquette vers l'avant ou vers l'arrière est quasiment sans conséquence sur le volume disponible du coffre.

On donne ci-après une description détaillée d'un mode de réalisation préféré d'un véhicule selon l'invention, en se référant aux figures suivantes :
[Fig. 1] représente une vue en perspective d'une banquette d'un véhicule selon l'invention dans une position avancée,
[Fig. 2] représente une vue en perspective de la banquette de la figure 1 dans une position intermédiaire entre une position avancée et une position reculée,
[Fig. 3] représente une vue en perspective de la banquette des figures 1 et 2 dans une position reculée,
[Fig. 4] représente une vue en perspective sous un premier angle d'un ensemble constitué par une biellette, une pièce support et un double ressort d'une banquette d'un véhicule selon l'invention,
[Fig. 5] représente une vue en perspective sous un deuxième angle de l'ensemble de la figure 4,
[Fig. 6] représente une vue en perspective sous un troisième angle de l'ensemble des figures 4 et 5,
[Fig. 7] représente une vue en perspective de l'ensemble des figures 4, 5 et 6, pour lequel la biellette est dans une position avancée,
[Fig. 8] représente une vue en perspective de l'ensemble de la figure 7, pour lequel la biellette est dans une position intermédiaire,
[Fig. 9] représente une vue en perspective de l'ensemble des figures 7 et 8, pour lequel la biellette est dans une position reculée,
[Fig. 10] représente une vue schématique de deux ressorts distincts remplaçant un double ressort et préfigurant leur orientation sur la biellette et la pièce support,
[Fig. 11] représente une vue en perspective d'une biellette fixée dans une zone d'extrémité de l'assise et dans une pièce support.

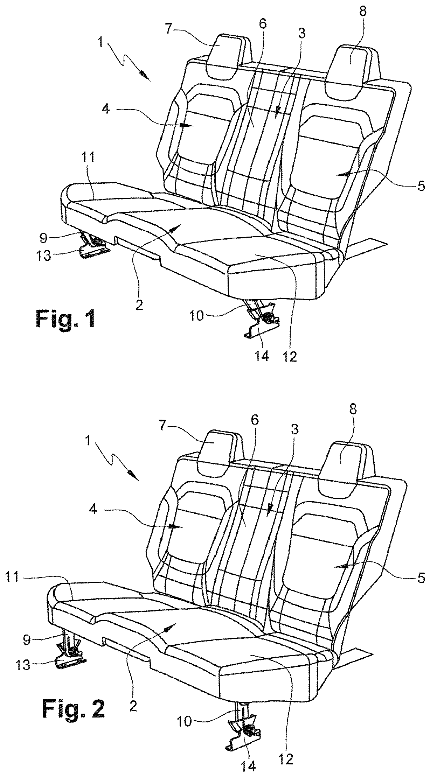

En se référant aux figures 1, 2 et 3, une banquette 1 d'un véhicule selon l'invention comprend une assise 2 et un dossier 3 et peut par exemple accueillir trois passagers. Sur l'exemple illustré sur ces trois figures, cette banquette 1 comprend deux sièges latéraux 4, 5 séparés par un siège central 6. Les deux sièges latéraux 4, 5 peuvent être chacun muni d'un appui-tête 7, 8 et le siège central 6 peut en être dépourvu. L'assise 2 de la banquette 1 est réalisée en un seul tenant, si bien qu'un déplacement de celle-ci entraine automatiquement et de façon simultanée un déplacement des assises des deux sièges latéraux 4, 5 et du siège central 6.

L'assise 2 de cette banquette 1 est montée sur un plancher du véhicule au moyen de deux biellettes 9, 10 avant, qui sont alignées suivant un axe transversal Y du véhicule. Chacune de ces biellettes 9, 10 est montée articulée à la fois dans une zone d'extrémité avant 11, 12 de l'assise 2, et dans une pièce support 13, 14 qui est fixée audit plancher. Les deux zones d'extrémité avant 11, 12 dans lesquelles sont montées en rotation les deux biellettes 9, 10, sont situées à l'avant de l'assise 2 et aux deux extrémités de celle-ci, considérées suivant un axe transversal Y du véhicule. Ces deux zones d'extrémité sont donc alignées suivant un axe transversal Y du véhicule.

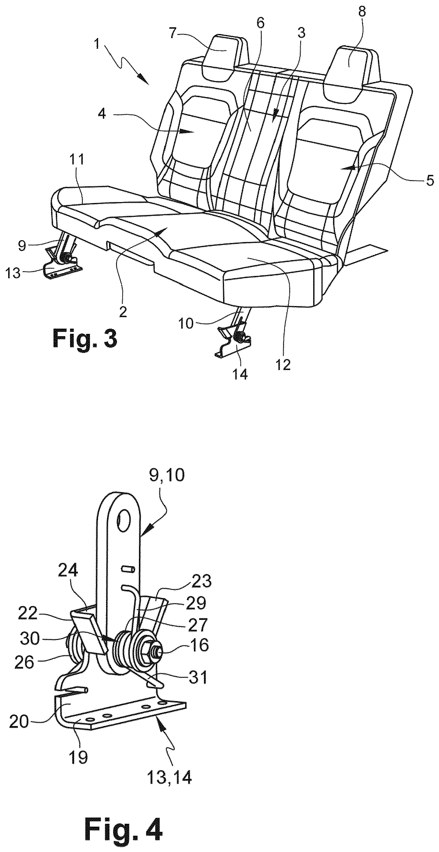

En se référant aux figures 4 à 9, chaque biellette 9, 10 est matérialisée par un bras allongé, rectiligne et de faible épaisseur. Chaque bras 9, 10 est plan et comprend deux surfaces principales planes et parallèles de même dimension. Chacun desdits bras 9, 10 possède également deux extrémités en arc-de-cercle, lesdites extrémités étant à considérer suivant un axe longitudinal dudit bras 9, 10. Chacune de ces extrémités est traversée par un orifice de forme cylindrique, dont l'axe de révolution est perpendiculaire aux deux surfaces principales planes du bras. Chaque biellette 9, 10 présente un axe de symétrie longitudinal et un axe de symétrie transversal.

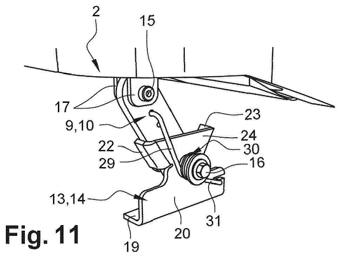

En se référant à la figure 11, l'orifice d'une extrémité de la biellette 9, 10 est destiné à recevoir un axe 15 de rotation d'une zone d'extrémité 11, 12 de l'assise 2, et l'orifice de l'autre extrémité de la biellette 9, 10 est destiné à recevoir un axe 16 de rotation de la pièce support 13, 14. L'axe 15 de la zone d'extrémité 11, 12 de l'assise 2 s'étend suivant une direction horizontale et transversale Y du véhicule et joint deux pattes de fixation 17 parallèles solidarisées à l'assise 2 et émergeant de celle-ci vers le bas, lesdites pattes de fixation 17 s'inscrivant chacune dans un plan vertical et longitudinal XZ du véhicule.

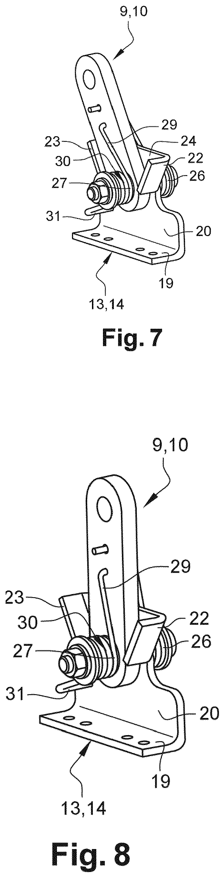

En se référant aux figures 7, 8 et 9, chaque pièce support 13, 14 comprend schématiquement un socle sous la forme de deux parois planes perpendiculaires 19, 20, dont une première paroi 19 est destinée à venir se poser sur le plancher et dont une deuxième paroi 20 s'étend dans un plan vertical et longitudinal XZ du véhicule. Cette deuxième paroi 20 est prolongée vers le haut par un élément de réception délimité par deux tronçons plans convergents 22, 23, définissant un cône, et par un tronçon de liaison 24 reliant lesdits deux tronçons convergents 22, 23. Le tronçon de liaison 24 est plan et de faible épaisseur et s'inscrit dans un plan vertical et longitudinal XZ du véhicule, et les deux tronçons convergents plans 22, 23 sont alignés suivant un axe longitudinal X du véhicule. L'axe de rotation 16 de la pièce support 13, 14, traverse le tronçon de liaison 24 sur un axe vertical séparant de façon symétrique les deux tronçons plans convergents 22, 23, dans une zone où la distance séparant lesdits deux tronçons convergents est la plus petite. Lorsque la biellette 9, 10 est montée sur l'axe de rotation 16 de la pièce support 13, 14, elle s'étend dans l'espace de ladite pièce support 13, 14 délimité par les deux tronçons plans convergents 22, 23 et par le tronçon de liaison 24 en étant au contact dudit tronçon de liaison 24.

En se référant aux figures 4 à 6, chaque biellette 9, 10 est montée sur l'axe de rotation 16 d'une pièce support 13, 14 par l'intermédiaire d'un double ressort 30, présentant une première composante 26 placée autour dudit axe 16 à l'extérieur du tronçon de liaison 25 et une deuxième composante 27 placée autour de cet axe 16 derrière la biellette 9, 10. De cette manière, la première composante 26 du ressort 30 et la deuxième composante 27 dudit ressort 30 enserrent la biellette 9, 10 et le tronçon de liaison 24 de la pièce support 13, 14. Schématiquement, chaque composante 26, 27 comprend un groupe de plusieurs spirales 28 en continu, enroulées autour de l'axe 16 de la pièce support 13, 14, une première extrémité dudit groupe de spirales 28 se terminant par un premier brin rectiligne 29 allongé venant s'accrocher à une encoche de la biellette 9, 10 et une deuxième extrémité de ce groupe se terminant par un deuxième brin rectiligne 31 venant s'accrocher à une encoche de la pièce support 13, 14.

En se référant aux figures 4 à 6, les deux composantes 26, 27 du ressort 30 sont précontraintes, de manière à avoir des actions antagonistes sur la biellette 9, 10. Autrement dit, une composante 26, 27 du ressort 30 tend à faire pivoter la biellette 9, 10 dans un sens autour de l'axe 16 de la pièce support 13, 14, tandis que l'autre composante 26, 27 tend à faire pivoter ladite biellette 9, 10 dans le sens inverse autour dudit axe 16. Par défaut, lorsqu'aucune force n'est exercée sur l'assise 2 de la banquette 1 pour la déplacer, les deux composantes 26, 27 du ressort se neutralisent en maintenant chaque biellette 9, 10 dans une direction verticale comme l'illustrent les figures 4 à 6 et 8. Cette configuration correspond à une position d'équilibre de la banquette 1.

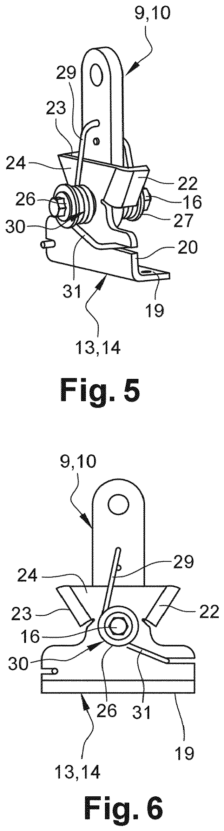

Comme le montre la figure 6, lorsqu'aucune force n'est appliquée sur l'assise 2 de la banquette 1 pour déplacer ladite banquette 1, le premier brin rectiligne 29 et le deuxième brin rectiligne 31 d'une même composante 26, 27 du ressort 30, sont sensiblement perpendiculaires.

Lorsqu'un individu souhaite placer la banquette 1 dans une position avancée au sein du véhicule, il exerce sur l'assise 2 de ladite banquette 1 un effort de poussée vers l'avant, entrainant un pivotement vers l'avant des deux biellettes 9,10. Ce pivotement s'effectue jusqu'à ce que chaque biellette 9, 10 vienne en butée contre le tronçon convergent avant 22 de chaque pièce support 13, 14. Durant ce pivotement vers l'avant, une composante 26, 27 du double ressort 30 va légèrement s'opposer à ce pivotement en réduisant l'angle entre le premier brin 29 et le deuxième brin 31, tandis que l'autre composante 26, 27 dudit double ressort 30 va largement favoriser celui-ci en augmentant l'angle entre le premier brin 29 et le deuxième brin 31. Les mêmes phénomènes se produisent lorsque l'individu souhaite placer la banquette 1 dans une position reculée dans le véhicule.

Ce double ressort 30 a pour fonctions essentielles :
- de maintenir par défaut chaque biellette 9, 10 dans une position verticale,
- de faciliter le déplacement de la banquette 1 soit vers l'avant, soit vers l'arrière, une fois qu'une amorce de déplacement a été déclenchée. De cette manière, l'individu n'a pas à produire un effort inconsidéré pour déplacer la banquette 1, qui se positionne facilement dans la position voulue.

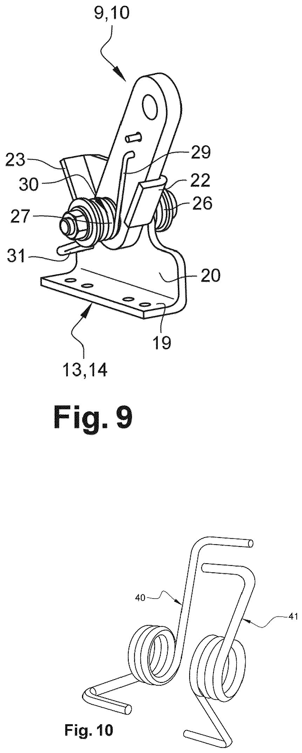

En se référant à la figure 10, le double ressort 30 précédemment décrit, peut être remplacé par deux ressorts 40, 41 distincts positionnés autour de l'axe 16 de rotation de la pièce support 13, 14, de manière à également exercer des actions antagonistes sur la biellette 9, 10. Il s'agit d'une alternative à la solution précédemment décrite et impliquant un double ressort 30.

Grâce à la présence des deux biellettes avant 9, 10 la banquette peut occuper:
- une position avancée comme illustré à la figure 1,
- une position reculée comme illustré à la figure 3,
- une position intermédiaire d'équilibre comme illustré à la figure 2 et pour laquelle les biellettes avant 9, 10 s'étendent verticalement.

Selon un mode de réalisation particulier de l'invention non montré sur les figures, l'assise 2 est reliée à un plancher arrière du véhicule par l'intermédiaire de deux biellettes arrière montées en rotation dans deux zones d'extrémité arrière de l'assise 2 et dans ledit plancher arrière. Ces deux biellettes arrière sont agencées de telle sorte qu'elles puissent pivoter chacune dans un plan vertical et longitudinal XZ, pour accompagner le pivotement des biellettes 9, 10 avant. De cette manière, les deux biellettes arrière accompagnent le mouvement des biellettes 9, 10 avant pour rendre le déplacement de la banquette 1 plus simple et plus propre, en empêchant notamment qu'une partie de l'assise 2 de la banquette 1 ne se déplace en étant directement au contact du plancher arrière, lors d'un mouvement vers l'avant ou vers l'arrière de la banquette 1.

Préférentiellement, le véhicule comprend des moyens de verrouillage de la banquette 1 dans la position reculée et dans la position avancée. Un individu désireux de faire passer la banquette 1 de la position avancée à la position reculée (ou vice et versa) désactive d'abord le moyen de verrouillage de la position avancée et amorce ensuite un déplacement de la banquette 1 vers l'arrière en direction de la position d'équilibre. Le ressort 30, va alors faciliter ce premier mouvement vers l'arrière pour atteindre la position d'équilibre. Une fois cette position d'équilibre atteinte, l'individu continue de déplacer la banquette 1 vers la position reculée, ledit ressort facilitant alors ce deuxième mouvement depuis ladite position d'équilibre. La banquette 1 se verrouille alors dans la position reculée. Autrement dit, quel que soit le mouvement de la banquette 1, vers l'avant ou vers l'arrière, que ledit mouvement soit amorcé depuis la position reculée, la position avancée ou la position d'équilibre, le ressort 30 est présent pour accompagner ce mouvement.

Lors d'une phase de roulage du véhicule alors que la banquette 1 est dans la position intermédiaire d'équilibre correspondant à une position verticale des biellettes 9, 10 avant, si un freinage brusque devait survenir, s'opérerait alors un verrouillage automatique de ladite banquette 1 dans la position avancée ou dans la position reculée.

## Revendications

1. Véhicule comprenant une banquette (1) permettant à au moins deux personnes de s'asseoir, ladite banquette (1) comprenant une assise (2) et un dossier (3), l'assise (2) étant reliée à un plancher du véhicule par l'intermédiaire de deux biellettes (9, 10) avant montées en rotation dans deux zones d'extrémité avant (11, 12) de l'assise (2) et dans deux pièces support (13, 14) du plancher placées au droit desdites zones d'extrémité (11, 12), les deux biellettes (9, 10) avant étant agencées de telle sorte qu'elles puissent pivoter chacune dans un plan vertical et longitudinal XZ du véhicule, entre une première position pour laquelle la banquette (1) est dans une position avancée et une deuxième position pour laquelle ladite banquette (1) est dans une position reculée, où chaque biellette (9, 10) est montée en rotation dans la pièce support (13, 14) au moyen d'au moins un ressort (30, 40, 41) précontraint ayant tendance par défaut à maintenir la biellette (9, 10) dans une position verticale correspondant à une position d'équilibre pour la banquette (1), **caractérisé en ce que** ledit au moins un ressort (30, 40, 41) est configuré pour favoriser un déplacement vers l'avant ou vers l'arrière de la banquette (1) en fonction de la direction de l'effort appliqué à ladite banquette (1) depuis sa position d'équilibre.

2. Véhicule selon la revendication 1, **caractérisé en ce qu'**il comprend des moyens de verrouillage de la banquette (1) dans la position avancée et dans la position reculée, et **en ce que** ledit au moins un ressort favorise un mouvement de la banquette (1) vers sa position d'équilibre depuis la position reculée ou la position avancée, lorsque le moyen de verrouillage correspondant a été désactivé.

3. Véhicule selon l'une quelconque des revendications 1 ou 2, **caractérisé en ce que** les deux zones d'extrémité (11, 12) de l'assise (2) sont alignées suivant un axe transversal Y du véhicule.

4. Véhicule selon l'une quelconque des revendications 1 à 3, **caractérisé en ce que** chaque biellette (9, 10) est une pièce plane et de faible épaisseur, présentant deux surfaces parallèles, et **en ce que** chacune desdites biellettes (9, 10) s'inscrit dans un plan vertical et longitudinal XZ du véhicule.

5. Véhicule selon la revendication 4, **caractérisé en ce que** chaque biellette (9, 10) est montée en rotation autour d'un axe (15) de l'assise (2) et autour d'un axe (16) d'une pièce support (13, 14), et **en ce que** lesdits deux axes (15, 16) sont parallèles et s'étendent suivant un axe horizontal et transversal Y du véhicule, lesdits deux axes (15, 16) passant par les deux surfaces parallèles de chaque biellette (9, 10) en étant perpendiculaires auxdites surfaces.

6. Véhicule selon l'une quelconque des revendications 1 à 5, **caractérisé en ce que** chaque pièce support (13, 14) présente une butée avant (22, 23) et une butée arrière (22, 23), alignées suivant un axe longitudinal X du véhicule, et **en ce que** lesdites butées (22, 23) délimitent l'amplitude angulaire de rotation de chaque biellette (9, 10) pour passer de la première position à la deuxième position et vice versa.

7. Véhicule selon la revendication 6, **caractérisé en ce que** chaque pièce support (13, 14) est matérialisée par une paroi comprenant deux tronçons plans convergents (22, 23) définissant un cône et un tronçon de liaison (24) reliant lesdits deux tronçons convergents (22, 23), et **en ce que** chaque biellette (9, 10) est placée dans l'espace délimité par lesdits trois tronçons (22, 23, 24), l'un des deux tronçons convergents (22, 23) matérialisant la butée avant et l'autre tronçon convergent matérialisant la butée arrière.

8. Véhicule selon l'une quelconque des revendications 1 à 7, **caractérisé en ce que** chaque biellette (9, 10) est montée en rotation dans une pièce support (13, 14) au moyen d'un seul ressort (30) précontraint ayant tendance par défaut à maintenir la biellette (9, 10) dans une position verticale, et **en ce que** ledit ressort (30) est configuré pour favoriser un déplacement vers l'avant ou vers l'arrière de la banquette (1) en fonction de la direction de l'effort appliqué à ladite banquette.

9. Véhicule selon la revendication selon l'une quelconque des revendications 1 à 7, **caractérisé en ce que** chaque biellette (9, 10) est montée en rotation dans une pièce support (13, 14) au moyen de deux ressorts (40, 41) précontraints dans des sens opposés et ayant tendance par défaut à maintenir la biellette (9, 10) dans une position verticale, et **en ce que** l'un desdits ressorts (40, 41) est configuré pour favoriser un déplacement vers l'avant de la banquette (1) et l'autre ressort (40, 41) est configuré pour favoriser un déplacement vers l'arrière de ladite banquette (1).

10. Véhicule selon l'une quelconque des revendications 1 à 9, **caractérisé en ce que** l'assise (2) est reliée à un plancher du véhicule par l'intermédiaire de deux biellettes arrière montées en rotation dans deux zones d'extrémité arrière de l'assise (2) et dans un plancher arrière, et **en ce que** les deux biellettes arrière sont agencées de telle sorte qu'elles puissent pivoter chacune dans un plan vertical et longitudinal XZ pour accompagner le pivotement des biellettes avant (9, 10) et guider le déplacement de la banquette (1).

## Patentansprüche

1. Fahrzeug, welches eine Bank (1) umfasst, die mindestens zwei Personen ermöglicht, sich zu setzen, wobei die Bank (1) ein Sitzteil (2) und eine Rückenlehne (3) umfasst, wobei das Sitzteil (2) mit einem Boden des Fahrzeugs über zwei vordere Schwenkarme (9, 10) verbunden ist, die drehbar in zwei vorderen Endbereichen (11, 12) des Sitzteils (2) und in zwei Stützteilen (13, 14) des Bodens, die direkt unter den Endbereichen (11, 12) angeordnet sind, gelagert sind, wobei die zwei vorderen Schwenkarme (9, 10) derart ausgebildet sind, dass sie jeweils in einer vertikalen Längsebene XZ des Fahrzeugs zwischen einer ersten Position, bei welcher sich die Bank (1) in einer vorgeschobenen Position befindet, und einer zweiten Position, bei welcher sich die Bank (1) in einer zurückgeschobenen Position befindet, schwenken können, wobei jeder Schwenkarm (9, 10) in dem Stützteil (13, 14) mittels mindestens einer vorgespannten Feder (30, 40, 41) drehbar gelagert ist, die bestrebt ist, den Schwenkarm (9, 10) standardmäßig in einer vertikalen Position zu halten, die einer Gleichgewichtsposition für die Bank (1) entspricht,
**dadurch gekennzeichnet, dass** die mindestens eine Feder (30, 40, 41) dafür ausgelegt ist, in Abhängigkeit von der Richtung der Kraft, die auf die Bank (1) ausgeübt wird, eine Verschiebung der Bank (1) aus ihrer Gleichgewichtsposition nach vorn oder nach hinten zu unterstützen.

2. Fahrzeug nach Anspruch 1, **dadurch gekennzeichnet, dass** es Mittel zur Verriegelung der Bank (1) in der vorgeschobenen Position und in der zurückgeschobenen Position umfasst, und dadurch, dass die mindestens eine Feder eine Bewegung der Bank (1) aus ihrer zurückgeschobenen Position oder vorgeschobenen Position in Richtung ihrer Gleichgewichtsposition unterstützt, wenn das entsprechende Verriegelungsmittel deaktiviert worden ist.

3. Fahrzeug nach einem der Ansprüche 1 oder 2, **dadurch gekennzeichnet, dass** die zwei Endbereiche (11, 12) des Sitzteils (2) entlang einer Querachse Y des Fahrzeugs ausgerichtet sind.

4. Fahrzeug nach einem der Ansprüche 1 bis 3, **dadurch gekennzeichnet, dass** jeder Schwenkarm (9, 10) ein flaches Teil von geringer Dicke ist, das zwei parallele Flächen aufweist, und dadurch, dass jeder der Schwenkarme (9, 10) in einer vertikalen Längsebene XZ des Fahrzeugs angeordnet ist.

5. Fahrzeug nach Anspruch 4, **dadurch gekennzeichnet, dass** jeder Schwenkarm (9, 10) um eine Achse (15) des Sitzteils (2) und um eine Achse (16) eines Stützteils (13, 14) drehbar gelagert ist, und dadurch, dass die zwei Achsen (15, 16) parallel sind und sich entlang einer horizontalen und quer verlaufenden Achse Y des Fahrzeugs erstrecken, wobei die zwei Achsen (15, 16) durch die zwei parallelen Flächen jedes Schwenkarms (9, 10) verlaufen und dabei zu diesen Flächen senkrecht sind.

6. Fahrzeug nach einem der Ansprüche 1 bis 5, **dadurch gekennzeichnet, dass** jedes Stützteil (13, 14) einen vorderen Anschlag (22, 23) und einen hinteren Anschlag (22, 23) aufweist, die entlang einer Längsachse X des Fahrzeugs ausgerichtet sind, und dadurch, dass die Anschläge (22, 23) die Drehwinkelamplitude jedes Schwenkarms (9, 10) bei der Bewegung von der ersten Position in die zweite Position und umgekehrt begrenzen.

7. Fahrzeug nach Anspruch 6, **dadurch gekennzeichnet, dass** jedes Stützteil (13, 14) von einer Wand gebildet wird, die zwei konvergente ebene Teilabschnitte (22, 23), die einen Kegel definieren, und einen Verbindungsteilabschnitt (24), der die zwei konvergenten Teilabschnitte (22, 23) verbindet, umfasst, und dadurch, dass jeder Schwenkarm (9, 10) in dem Zwischenraum angeordnet ist, der von den drei Teilabschnitten (22, 23, 24) begrenzt wird, wobei einer der zwei konvergenten Teilabschnitte (22, 23) den vorderen Anschlag bildet und der andere konvergente Teilabschnitt den hinteren Anschlag bildet.

8. Fahrzeug nach einem der Ansprüche 1 bis 7, **dadurch gekennzeichnet, dass** jeder Schwenkarm (9, 10) in einem Stützteil (13, 14) mittels einer einzigen vorgespannten Feder (30) drehbar gelagert ist, die bestrebt ist, den Schwenkarm (9, 10) standardmäßig in einer vertikalen Position zu halten, und dadurch, dass die Feder (30) dafür ausgelegt ist, in Abhängigkeit von der Richtung der Kraft, die auf die Bank ausgeübt wird, eine Verschiebung der Bank (1) nach vorn oder nach hinten zu unterstützen.

9. Fahrzeug nach Anspruch nach einem der Ansprüche 1 bis 7, **dadurch gekennzeichnet, dass** jeder Schwenkarm (9, 10) in einem Stützteil (13, 14) mittels zweier Federn (40, 41) drehbar gelagert ist, die in entgegengesetzten Richtungen vorgespannt sind und bestrebt sind, den Schwenkarm (9, 10) standardmäßig in einer vertikalen Position zu halten, und dadurch, dass eine der Federn (40, 41) dafür ausgelegt ist, eine Verschiebung der Bank (1) nach vorn zu unterstützen, und die andere Feder (40, 41) dafür ausgelegt ist, eine Verschiebung der Bank (1) nach hinten zu unterstützen.

10. Fahrzeug nach einem der Ansprüche 1 bis 9, **dadurch gekennzeichnet, dass** das Sitzteil (2) mit einem Boden des Fahrzeugs über zwei hintere Schwenkarme verbunden ist, die drehbar in zwei hinteren Endbereichen des Sitzteils (2) und in einem hinteren Boden gelagert sind, und dadurch, dass die zwei hinteren Schwenkarme derart ausgebildet sind, dass sie jeweils in einer vertikalen Längsebene XZ schwenken können, um die Schwenkung der vorderen Schwenkarme (9, 10) zu begleiten und die Verschiebung der Bank (1) zu führen.

## Claims

1. Vehicle comprising a bench seat (1) on which at least two people can sit, said bench seat (1) comprising a seat pan (2) and a backrest (3), the seat pan (2) being connected to a floor of the vehicle via two front links (9, 10), which are mounted so as to rotate in two front end regions (11, 12) of the seat pan (2) and in two support pieces (13, 14) of the floor, which are placed in line with said end regions (11, 12), the two front links (9, 10) being arranged so that they are each able to pivot, within a vertical and longitudinal plane XZ of the vehicle, between a first position in which the bench seat (1) is in an advanced position and a second position in which said bench seat (1) is in a retracted position, wherein each link (9, 10) is mounted so as to rotate in the support piece (13, 14) by means of at least one pre-loaded spring (30, 40, 41) that tends, by default, to maintain the link (9, 10) in a vertical position corresponding to a balanced position for the bench seat (1), **characterized in that** said at least one spring (30, 40, 41) is configured to encourage the bench seat (1) to move forwards or backwards, depending on the direction of the force applied to said bench seat (1), from its balanced position.

2. Vehicle according to Claim 1, **characterized in that** it comprises means for locking the bench seat (1) in the advanced position and in the retracted position, and **in that** said at least one spring encourages the bench seat (1) to move into its balanced position from the retracted position or the advanced position once the corresponding locking means has been deactivated.

3. Vehicle according to either one of Claims 1 and 2, **characterized in that** the two end regions (11, 12) of the seat pan (2) are aligned along a transverse axis Y of the vehicle.

4. Vehicle according to any one of Claims 1 to 3, **characterized in that** each link (9, 10) is a planar piece that has a small thickness and has two parallel surfaces, and **in that** each of said links (9, 10) is inscribed within a vertical and longitudinal plane XZ of the vehicle.

5. Vehicle according to Claim 4, **characterized in that** each link (9, 10) is mounted so as to rotate about a pin (15) of the seat pan (2) and about a pin (16) of a support piece (13, 14), and **in that** said two pins (15, 16) are parallel and extend along a horizontal and transverse axis Y of the vehicle, said two pins (15, 16) passing through the two parallel surfaces of each link (9, 10) and being perpendicular to said surfaces.

6. Vehicle according to any one of Claims 1 to 5, **characterized in that** each support piece (13, 14) has a front stop (22, 23) and a rear stop (22, 23), which are aligned along a longitudinal axis X of the vehicle, and **in that** said stops (22, 23) delimit the angular range of rotation of each link (9, 10) for passing from the first position to the second position and vice versa.

7. Vehicle according to Claim 6, **characterized in that** each support piece (13, 14) is formed by a wall comprising two convergent planar portions (22, 23) defining a cone and a connecting portion (24) connecting said two convergent portions (22, 23), and **in that** each link (9, 10) is positioned within the space delimited by said three portions (22, 23, 24), one of the two convergent portions (22, 23) forming the front stop and the other convergent portion forming the rear stop.

8. Vehicle according to any one of Claims 1 to 7, **characterized in that** each link (9, 10) is mounted so as to rotate in a support piece (13, 14) by means of a single pre-loaded spring (30) that tends, by default, to maintain the link (9, 10) in a vertical position, and **in that** said spring (30) is configured to encourage the bench seat (1) to move forwards or backwards, depending on the direction of the force applied to said bench seat.

9. Vehicle according to Claim according to any one of Claims 1 to 7, **characterized in that** each link (9, 10) is mounted so as to rotate in a support piece (13, 14) by means of two springs (40, 41) that are pre-loaded in opposite directions and that tend, by default, to maintain the link (9, 10) in a vertical position, and **in that** one of said springs (40, 41) is configured to encourage the bench seat (1) to move forwards and the other spring (40, 41) is configured to encourage said bench seat (1) to move backwards.

10. Vehicle according to any one of Claims 1 to 9, **characterized in that** the seat pan (2) is connected to a floor of the vehicle via two rear links, which are mounted so as to rotate in two rear end regions of the seat pan (2) and in a rear floor, and **in that** the two rear links are arranged so that they are each able to pivot, within a vertical and longitudinal plane XZ, in order to accompany the pivoting of the front links (9, 10) and to guide the movement of the bench seat (1).
